# EUROPEAN PATENT APPLICATION

(11) **EP 2 065 866 A1**
(43) Date of publication of application: **03.06.2009**
(21) Application number: 08103035.5
(22) Date of filing: 27.03.2008
(51) Int. Cl.: G08G 1/01

(54) **System and method for transmitting alert locations to navigational devices**

(30) Priority: 18.11.2007 US 941955
(71) Applicant: Qualcomm Incorporated, San Diego, CA 92121-1714 (US)
(72) Inventor: Sprigg, Stephen A., Poway, CA CA 92064 (US)
(74) Representative: Copp, David Christopher

(57) **Abstract**

An originating navigation device sends an alert location to a recipient navigation device over a wireless network. The originating navigation device is operable to classify the alert location (e.g. traffic accident) and associate additional data. The recipient navigation device receives the alert location and may plan an alternative route, which circumnavigates the alert location. Further, if the recipient navigation device already has a route selected, the recipient navigation device may determine the estimated delay caused by the alert condition occurring at the alert location. The recipient device may apply filtering rules in order to screen out undesired alert locations sent by the originating navigation device.

## Description

### FIELD

The present invention generally relates to navigation devices and, more particularly, to the transmitting of alert locations to navigation devices.

### DESCRIPTION OF THE RELATED ART

Navigation devices have the ability to pinpoint their location virtually anywhere on the planet using global positioning system (GPS). Navigation devices can tell the user their current latitude and longitude coordinates or even the nearest street address. Some navigation devices are integrated into modern cars in order to provide real-time navigation assistance. Many navigation devices also allow users to input destinations by using a keypad or a touchscreen. The navigation device then displays the desired destination on a map and provides directions to the location for the user using audio or text.

With the advent of third generation (3G) wireless communication, more and more navigation devices are integrated into a wireless device. While such integrated devices are capable of communicating across a wireless network, none exploit this capability to transmit locations and other data to remote navigation devices.

For instance, Lucky is a user of a navigation device and is approaching a freeway junction during rush hour. She takes the off-ramp to change freeways when suddenly the car in front of her is sideswiped by another car. Lucky stops her car just in time, but the off-ramp is completely obstructed, and traffic has now come to a standstill. Lucky and other drivers use their cellular telephones to alert authorities, who arrive at the scene fifteen minutes later. But the rescue personnel are so consumed with rescuing the victims that they are unable to deal with the worsening traffic problem. About thirty minutes later, a news crew begins to observe the accident from their traffic helicopter, and the news crew broadcasts warnings to other drivers via radio and television, so other drivers may avoid the area. However, the warning does little to prevent the thousands of cars already on their way to the obstructed freeway junction.

The problem becomes more difficult when an event is not reported by the public authorities or the media. Road construction is a difficult event to communicate to drivers because delays caused by construction are unpredictable. Depending on the time of day and the work being performed, the road could be completely closed, restricted to slow-moving traffic, or entirely open with no delays. Moreover, even if road construction information were reported to the public, it is unlikely that the information would reach an audience which could actually use the information e.g. drivers already on the road en route to a road construction site.

What is needed is a system which allows users to transmit an alert location to other navigation devices. The navigation device can further associate the alert location with other data or a message (e.g. road construction, traffic accident, flood, etc.) in order to notify other navigation device users of time-sensitive events. Further, the navigation device could plan routes based on the alert location.

### SUMMARY OF THE INVENTION

One embodiment includes a method of processing an alert location at a navigation device. The method comprises detecting input of an alert condition, determining a current location of the navigation device, generating the alert location from the alert condition and the current location, and transmitting the alert location. The method may also associate additional data with the alert location. Further, the method may also wirelessly transmit the alert location to a server.

Another embodiment includes one or more navigation devices. The first navigation device comprises an interface which receives input of an alert condition, a processor which determines a current location of the first navigation device, and a connection which transmits an alert location. The processor generates the alert location from the alert condition and the alert location. The processor of the first navigation device may also associate additional data with the alert location. Further, the processor of the first navigation device may wirelessly transmit the alert location to a server. A second navigation device may be comprised of a connection which receives the alert location, an interface which displays a map, and a processor which adds the alert location to the map. The second navigation device's processor may present a suggested alert condition based on the received alert location. The processor of the second navigation device may selectively process the alert location. For instance, the processor of the second navigation device may process a filtering rule against the alert location such that the filtering rule selectively prevents further processing of the alert location. The processor of the second navigation device may generate a route from a current location of the second navigation device to the alert location, and the current location could be determined using global positioning system. The processor of the second navigation device could also determine a planned route from a current location of the second navigation device to a user-defined location. The processor of the second navigation device could determine an estimated travel time to the user-defined location via the planned route. Further, the processor of the second navigation device could adjust the estimated travel time by an estimated delay caused by the alert condition occurring at the alert location. The estimated delay could be determined by monitoring a change in position of the first navigation device. The processor of the second navigation device may be operable to determine an alternative route to the user-defined location based upon the alert location such that the alternative route avoids the alert location.

Another embodiment includes a navigation device operable to process an alert location. The navigation device comprises means for detecting input of an alert condition, means for determining a current location of the navigation device, means for generating the alert location from the alert condition and the current location, and means for transmitting the alert location. The navigation device may also include means for associating additional data with the alert location. Further, the navigation device may also include means for wirelessly transmitting the alert location to a server.

Another embodiment includes a computer program product which comprises a computer-readable medium. The computer-readable medium comprises instructions for detecting input of an alert condition, determining a current location of a navigation device, generating an alert location from the alert condition and the current location, and transmitting the alert location. The computer-readable medium may also include instructions for associating additional data with the alert location. Further, the computer-readable medium may also include instructions for wirelessly transmitting the alert location to a server.

Another embodiment includes a method for processing an alert location at a navigation device. The method comprises receiving the alert location which is generated from an alert condition and a location, displaying a map, and adding the alert location to the map. The method may also associate additional data with the alert location. In addition, the method may present a suggested alert condition based on the received alert location. Further, the method may selectively process the alert location. A filtering rule may be used to selectively prevent further processing of the alert location. The method may generate a route from a current location of the navigation device to the alert location, and the current location may be determined using global positioning system. In addition, the method may determine a planned route from a current location of the navigation device to a user-defined location. An estimated travel time along the planned route may be determined. Further, the estimated travel time to the user-defined location may be adjusted by an estimated delay caused by the alert condition occurring at the alert location. The estimated delay could be determined by monitoring a change in position of a second navigation device, which is also the source of the alert location. An alternative route to the user-defined location may be determined such that the alternative route avoids the alert location.

Another embodiment includes a navigation device for processing an alert location. The navigation device comprises means for receiving the alert location which is generated from an alert condition and a location, means for displaying a map, and means for adding the alert location to the map. The navigation device may also include means for associating additional data with the alert location. In addition, the navigation device may also include means for presenting a suggested alert condition based on the alert location. Further, the navigation device may include means for selectively processing the alert location. In addition, the navigation device may include means for applying a filtering rule against the alert location to selectively prevent further processing of the alert location. The navigation device may include means for generating a route from a current location of the navigation device to the alert location, and the current location may be determined using global positioning system. In addition, the navigation device may include means for determining a planned route from a current location of the navigation device to a user-defined location. An estimated travel time along the planned route may be determined. Further, the estimated travel time to the user-defined location may be adjusted by an estimated delay caused by the alert condition occurring at the alert location. The estimated delay could be determined by means for monitoring a change in position of a second navigation device, which is the source of the alert location. The navigation device may include means for determining an alternative route to the user-defined location such that the alternative route avoids the alert location.

Another embodiment includes a computer program product which comprises a computer-readable medium. The computer-readable medium comprises instructions for receiving an alert location which is generated from an alert condition and a location, displaying a map, and adding the alert location to the map. The computer-readable medium may also include instructions for associating additional data with the alert location. In addition, the computer-readable medium may include instructions for presenting a suggested alert condition based on the received alert location. Further, the computer-readable medium may include instructions for selectively processing the alert location. In addition, the computer-readable medium may include instructions for applying a filtering rule against the alert location to selectively prevent further processing of the alert location. The computer-readable medium may include instructions for generating a route from a current location of a navigation device to the alert location, and the current location may be determined using global positioning system. In addition, the computer-readable medium may include instructions for determining a planned route from a current location of the navigation device to a user-defined location. An estimated travel time along the planned route may be determined. Further, the estimated travel time to the user-defined location may be adjusted by an estimated delay caused by the alert condition occurring at the alert location. The estimated delay could be determined by instructions for monitoring a change in position of a second navigation device, which is the source of the alert location. The computer-readable medium may further include instructions for determining an alternative route to the user-defined location such that the alternative route avoids the alert location.

Another embodiment includes a server which comprises a connection, and a processor which is operable to receive an alert location from a first navigation device and is operable to transmit the alert location to at least one second navigation device. The alert location is generated from an alert condition and a location generated by the first navigation device. The processor may multicast the alert location to a plurality of second navigation devices using the connection. Further, the processor may selectively prevent the connection from transmitting the alert location to the at least one second navigation devices by processing a filtering rule. The filtering rule may be inputted into the server using an interface. The processor may generate a suggested alert condition based on the received alert location. In addition, the connection may transmit the suggested alert condition to the at least one second navigation device.

Additional embodiments will be apparent in the foregoing description and equivalents thereof.

### BRIEF DESCRIPTION OF THE DRAWINGS

In the figures, like reference numerals refer to like parts throughout the various views unless otherwise indicated.

FIG. 1 is a diagram of a system for transmitting an alert location to a navigation device;

FIG. 2 is a block diagram which illustrates an alert device which may be used to transmit an alert location;

FIG. 3 is a flowchart illustrating the process of transmitting an alert location to the navigation device;

FIG. 4 is a block diagram which illustrates the components of the navigation device;

FIG. 5 is a block diagram which illustrates the components of a server;

FIG. 6 is a diagram illustrating a route being planned based upon locations transmitted by other devices; and

FIG. 7 is a flowchart illustrating the process of route planning as illustrated in FIG. 6.

### DETAILED DESCRIPTION

The word "exemplary" is used herein to mean "serving as an example, instance, or illustration." Any embodiment described herein as "exemplary" is not necessarily to be construed as preferred or advantageous over other embodiments.

In this description, the term "application" may also include files having executable content, such as: object code, scripts, byte code, markup language files, and patches. In addition, an "application" referred to herein, may also include files that are not executable in nature, such as documents that may need to be opened or other data files that need to be accessed.

In this description, the terms "communication device," "wireless device," "wireless telephone," "wireless communications device," and "wireless handset" are used interchangeably. With the advent of third generation (3G) wireless technology, more bandwidth availability has enabled more electronic devices with wireless capabilities. Therefore, a wireless device could be a cellular telephone, a pager, a PDA, a smartphone, a navigation device, or a computer with a wireless connection.

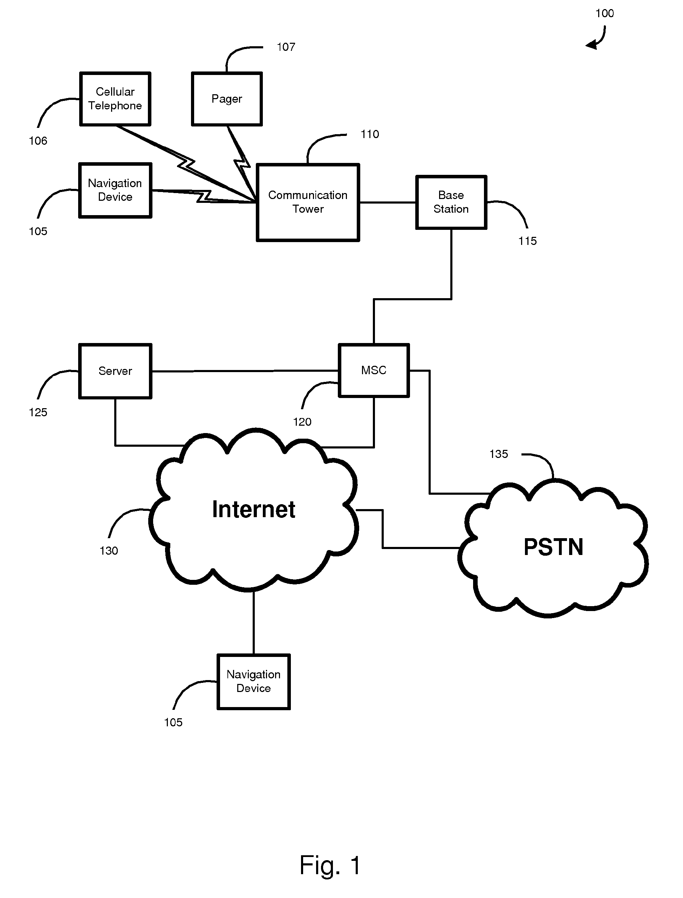

FIG. 1 depicts an exemplary communications network 100 for transmitting an alert location. The communication network 100 includes a wireless communications network, the public switched telephone network (PSTN) 135, and the Internet 130.

The wireless communications network includes a plurality of communication towers 110, each connected to a base station 115 and serving a plurality of navigation devices 105, cellular telephones 106, pagers 107, or other wireless devices. A navigation device 105 can be a stand-alone device or can be integrated into a cellular telephone, a pager, a PDA, a laptop, or other portable electronic devices capable of determining its location and communicating with other electronic devices. The navigation device 105 may be capable of storing multiple locations as saved destinations. The navigation device 105 may further be capable of generating a route based on its location, a user-defined location, or an alert location.

For clarity, the navigation device 105 may be hereinafter referred to as an "originating navigation device" when transmitting the alert location. Likewise, the navigation device 105 may be hereinafter referred to as a "recipient navigation device" when receiving the alert location. Both terms of convenience still refer to the same physical navigation device 105 and are used to provide the reader with information about the navigation device's 105 role in the process of communicating the alert location.

Commands and data may be transmitted between the navigation device 105 and the communication tower 110. Communication between the navigation device 105 and the communication tower 110 can be based on different technologies, such as code division multiplexed access (CDMA), time division multiplexed access (TDMA), frequency division multiplexed access (FDMA), orthogonal frequency division multiplexed access (OFDMA), global system for mobile communications (GSM), or other technologies that may be used for the wireless communication. The data received by the communication tower 110 is sent to a base station 115 and then forwarded to a mobile switching center (MSC) 120, which is connected to the Internet 130 and the public switched telephone network (PSTN) 135.

The Internet 130 is a high-speed data network. The navigation device 105 may access the Internet 130 by an 802.11 wireless network, a digital subscriber line (DSL), a dial-up internet access connection, or by connecting directly to a hub on the Internet 130.

A server 125 may be connected to the MSC 120 and the Internet 130. The server 125 may receive the alert location from the navigation device 105 through the MSC 120 if the navigation device 105 is connected to the wireless communications network. The server may alternatively receive the alert location from the navigation device 105 through the Internet 130 if the navigation device 105 is connected to the Internet 130. For instance, the navigation device may be connected to an 802.11 wireless network through which the navigation device 105 may send the alert location to the server via the Internet 130.

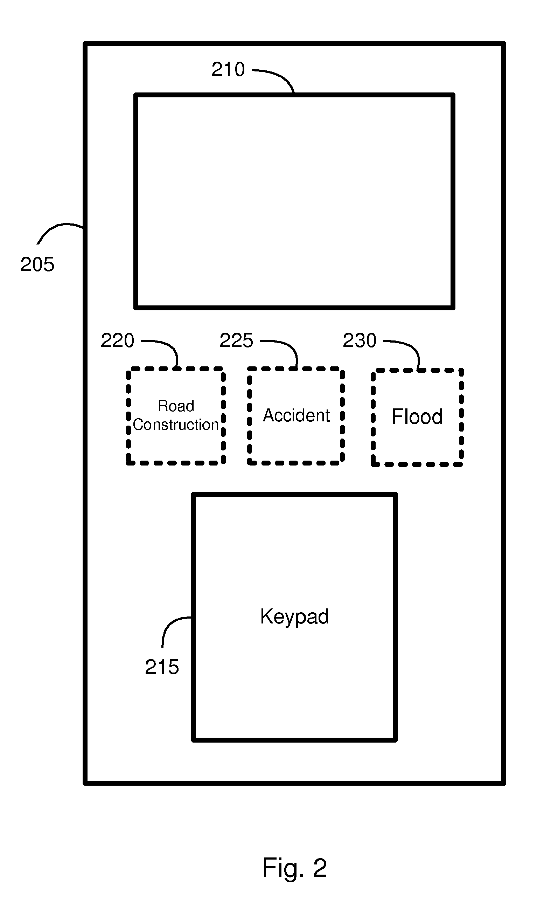

FIG. 2 depicts an alert device 205 operable to transmit the alert location to the recipient navigation device 105. The alert device 205 may be similar to the originating navigation device 105, but the alert device 205 need not have the complete functionality of the originating navigation device 105. Likewise, the originating navigation device 105 may not completely implement the functionality of the alert device 205, yet the originating device 105 may still have the features required to transmit the alert location. The alert device 205 may have a display 210 which communicates information to the user. The alert device 205 may have a touchscreen 210 which is both operable to receive information from the user as touch-sensitive input as well as operable to display information to the user. A keypad 215 allows the user to input information into the alert device 205.

The alert location is generated based on an alert condition and a location. The alert condition is a real-world event which a user of the navigation device would like to share with other users. For instance, the alert condition could be a fire, a flood, road construction, or a one-day shopping event at the mall, etc. The location will be in many circumstances the position of the alert condition (e.g., the position of the flood). However, the location is not limited to the position of the alert condition and could be a separate position that is useful to process the alert condition. The alert condition and the location are combined to generate the alert location. The alert location may be further associated with additional data, such as a message, image file, application, hyperlink, etc.

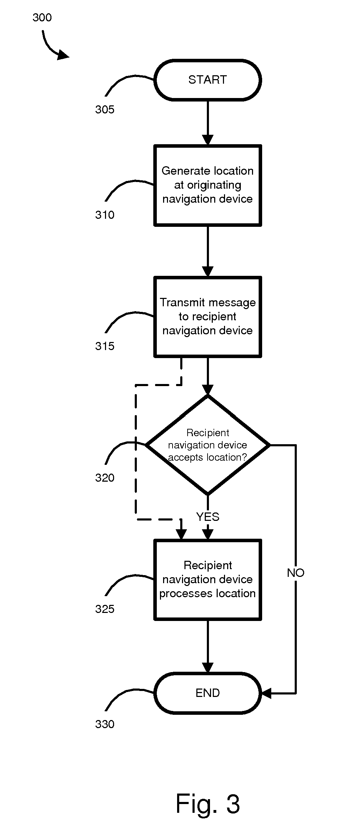

In one embodiment, the alert device 205 may have any number of predetermined alert buttons, which transmit the alert location and other data. For instance, a road construction button 220 may be pressed and communicates both the alert location and a message. The road construction button 220 may be used when the alert device 205 is near road construction that is causing delay to drivers on the road. The road construction would be an example of an alert condition. Once the road construction button 220 is pressed, the alert device 205 ascertains its current location and communicates its location and alert condition as the alert location to the recipient navigation device 105. The alert location may be associated with a message, for example, "Warning: Road Construction." The message may be predetermined or user-defined. The recipient navigation device 105 may instantly display a notification upon receiving the alert location, indicating a real-world location of the road construction. The user of the recipient navigation device 105 may successfully navigate around the road construction. The process of transmitting the alert location is provided in further detail in FIG. 3.

The alert device 205 may contain an accident button 225, which operates similarly to the road construction button 220 except the accident button 225 could be used to notify the recipient navigation device 105 of a different alert condition, e.g., the traffic accident. Similarly, a flood button 230 could be located on the alert device 205 and could be used to notify the recipient navigation device 105 of flooding during inclement weather.

While the alert device 205 contains specific exemplary alert buttons (e.g. the road construction button 220, the accident button 225, and the flood button 230), the alert device 205 could contain any number of similar alert buttons adapted to different alert conditions. For example, the alert device 205 could be designed for a college student and might only need one alert button called "party," which would transmit a location of a social gathering as the alert location.

The alert buttons in FIG. 2 are shown as dotted line boxes to indicate that the functionality of any of the alert buttons could be performed using a software interface. In one embodiment, the software interface could be a menu system which utilizes softkeys on the alert device 205. Further, the software interface could utilize the display 210 or keypad 215 for user interaction. In addition, the software interface could utilize the touchscreen 210. In one embodiment, the alert buttons could be shown on the touchscreen 210 for user interaction. In an embodiment using the touchscreen 210, the alert buttons and keypad 215 could be omitted such that user-interaction could be achieved through the touchscreen 210. If the keypad 215 and alert buttons are omitted, the touchscreen 210 could occupy most of the surface of the alert device 205 in order to enable more area for user interaction.

The software interface could be dynamically updated with new alert conditions (e.g. earthquake, forest fire, snowstorm, etc.). In one embodiment, the new alert condition could be downloaded to the alert device 205. In another embodiment, the user could manually enter a new alert condition into the alert device 205. In yet another embodiment, the server 125 could be used to update the software interface of one or more navigation devices 105.

Further, the software interface could be customized by a received alert location in order to create a suggested alert condition. For instance, the originating device 105 could generate an alert condition related to a police action, such as a bank robbery. The location would be the bank, and the message associated with the alert location would be, "Police responding to a bank robbery." The alert location could then be transmitted from the originating navigation device 105 to the recipient navigation device 105 such that the software interface of the recipient navigation device 105 is updated upon receiving alert location. For example, upon receiving the alert location, the recipient navigation device 105 could present a suggested alert condition e.g. "Police action in progress. Avoid the area." A button on the display 210 or touchscreen 210 could be presented in order to allow the recipient navigation device 105 to respond to the bank robbery alert condition. Optionally, the server 125 could be utilized in order to update the software interface of one or more navigation devices 105 with a suggested alert condition.

FIG. 3 is a flowchart which illustrates the process 300 of the originating navigation device 105 transmitting the alert location to the recipient navigation device 105. The process 300 begins at START block 305. Proceeding to block 310, the originating navigation device 105 receives input indicating that a location should be sent to recipient navigation device 105 as the alert location. The originating navigation device 105 could ascertain the location using GPS, triangulation, or other method known to one of skill in the art. The location could even be user-defined such that it does not correspond to the location of the originating navigation device 105.

In one embodiment, the user might see a traffic accident and could press the alert button similar to the accident button 225 (found in FIG. 2) in order to alert other drivers of potential delays. It would be obvious to one of skill in the art to further expand on the accident button's 225 functionality by allowing the user to rate the severity of the accident, add comments, or even associate an image with the alert location. Such expanded functionality varies depending on the context of the situation, and similar expanded functionality would be obvious to one skilled in the art.

Further, the originating navigation device 105 could associate additional data with the alert location such as a message, an image, a sound file, an application, a hyperlink, or other similar data obvious to one of skill in the art. While the alert location may simply be referred to as such, the reader should understand that additional data may be associated with the alert location.

Proceeding to block 315, the originating navigation device 105 communicates the alert location to the recipient navigation device 105. In one embodiment, the originating navigation device 105 could transmit the alert location to the server 125, which would then relay the alert location to the recipient navigation device 105. In another embodiment, the originating navigation device 105 could directly communicate the alert location to the recipient navigation device 105.

Proceeding to block 320, the recipient navigation device 105 receives the alert location from the originating navigation device 105. The recipient navigation device 105 may either accept or reject the alert location. Since there may be a large number of originating navigation devices 105, all of which could send alert locations, the recipient device 105 may need some functionality to filter out undesired or inaccurate alert locations. In one embodiment, the recipient navigation device 105 may have user-defined filtering rules which allow the recipient navigation device 105 to selectively filter out unwanted alert locations or automatically accept desired alert locations. Further, such user-defined filtering rules could exist on the server 125 or on the recipient navigation device 105. One of skill in the art may employ spam filtering methods (common to email) in order to filter out particular alert locations.

In another embodiment, the recipient navigation device 105 could selectively accept or reject the alert location based on user-input. In yet another embodiment, the alert condition may be associated with an age such that the alert condition expires after an amount of time. Expired alert conditions may then be discarded or ignored by the navigation device 105 or the server 125. For example, the recipient navigation device 105 could be configured to consider an alert location with an age greater than 24 hours to be expired, at which point the recipient navigation device 105 could ignore or discard the expired alert location. Likewise, the server 125 could be similarly configured to handle expired alert locations.

If the recipient navigation device 105 rejects the alert location, the process 300 proceeds along the NO path to end block 330 where the process 300 terminates. If the recipient navigation device 105 accepts the alert location, the process 300 proceeds along the YES path to block 325. Going back to block 315, the recipient navigation device 105 may automatically accept the request thus bypassing block 320, and the process 300 proceeds along the dotted line to block 325.

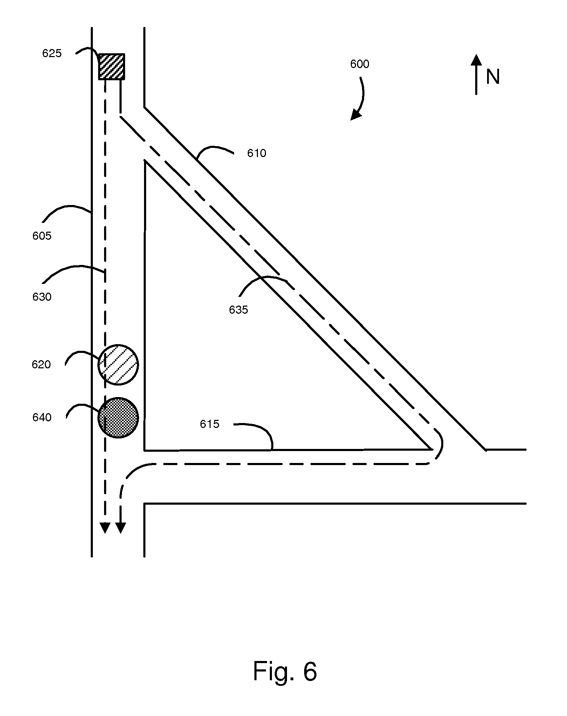

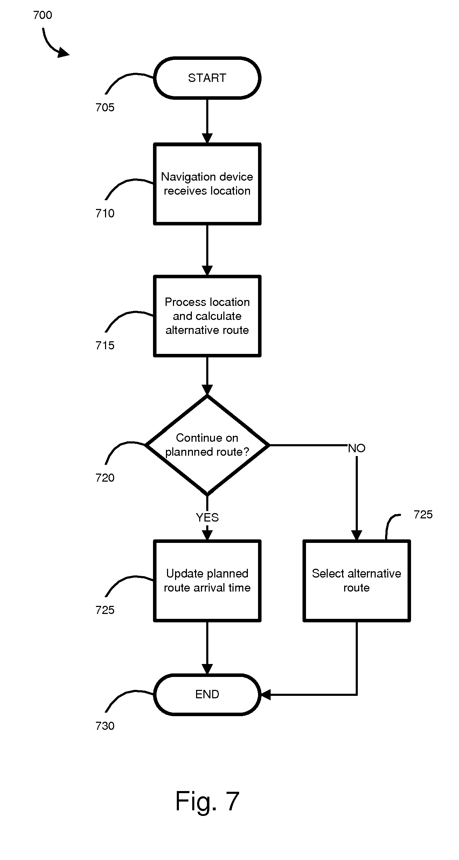

Proceeding to block 325, the recipient navigation device 105 processes the alert location. If any additional data is associated with the alert location, the recipient navigation device 105 further processes the additional data in block 325. In one embodiment, the recipient navigation device 105 could display a notification to the user and automatically update the display to show the alert location. The recipient navigation device 105 may plan a route based on the alert location. For example, if the alert location is associated with a traffic accident, the recipient navigation device 105 could plan an alternative route around the traffic accident. The process of alternative route planning is further described in FIG. 6 and FIG. 7 below. The process 300 then terminates in the END block 330.

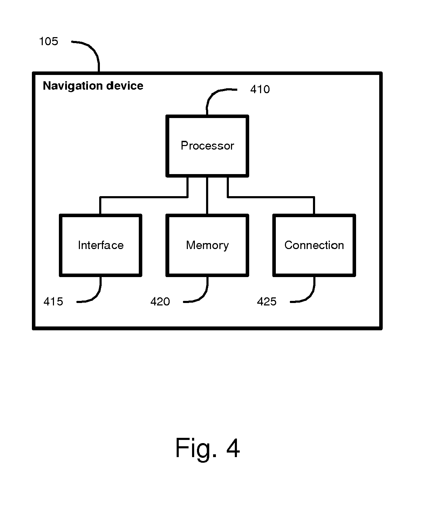

FIG. 4 illustrates the components of the navigation device 105, which contains a processor 410, an interface 415, a memory 420, and a connection 425. The processor 410 is operable to execute logic as computer-implemented instructions. When the recipient navigation device 105 receives the alert location, the processor 410 may be utilized to calculate a route based on the alert location as described above in FIG. 3. For example, if the navigation device 105 receives an alert location associated with a flood, the processor 410 could execute computer-implemented instructions which plan a route around the flood. Alternatively, the processor 410 could execute computer-implemented instructions in order to plan a route directly to the alert location, e.g., when the alert location corresponds to a party or a one-day sale at a department store. The processor 410 could also be utilized to execute filtering rules as described above in FIG. 3 in order to selectively filter out unwanted alert locations.

The interface 415 facilitates user interaction with the navigation device 105. The interface 415 may visually present alert location-related information to the user by a display, a speaker, a headset, or other component capable of output to the user. The interface 415 may accept input from the user through a keypad, a keyboard, a touchscreen, a mouse, or other component capable of accepting user input. The interface 415 on the originating navigation device 105 may be used to initiate the process 300 of transmitting the alert location to the recipient navigation device 105 as described in FIG. 3. Additionally, the interface 415 on the recipient navigation device 105 may be used to accept additional data related to the alert location as described in FIG. 3. Further, the interface 415 may accept input related to filtering rules as described in FIG. 3. In addition, the interface 415 may be used to enter a user-defined location to which a route may be planned.

The memory 420 may be used to store alert locations, routes, filtering rules, or any other data related to the transmission of alert locations. The memory 420 could be embodied as a flash memory, a random access memory, a hard disk drive, or other component capable of data storage. As described in FIG. 3 above, the recipient navigation device 105 may have filtering rules which could be stored in the memory 420. If the alert location is associated with any additional data (e.g. image, sound file, etc.), the additional data may be stored in the memory 420 as well. Additionally, the navigation device 105 may store any route which is planned based on the alert location as further described in FIG. 3, FIG. 6, and FIG. 7.

The connection 425 allows for the navigation device 105 to communicate with data networks. As shown in FIG. 1, the originating navigation device 105 is capable of transmitting the alert location to the recipient navigation device 105 via the Internet 130 or a wireless communication network (as described in FIG. 1). Therefore, the connection 425 may be embodied as a component capable of communication over the Internet 130 or the wireless communication network depending on the real-world application of the navigation device 105. For example, the connection 425 may be embodied as an 802.11 network card, an integrated cellular communication device, a Bluetooth card, an infrared card, etc.

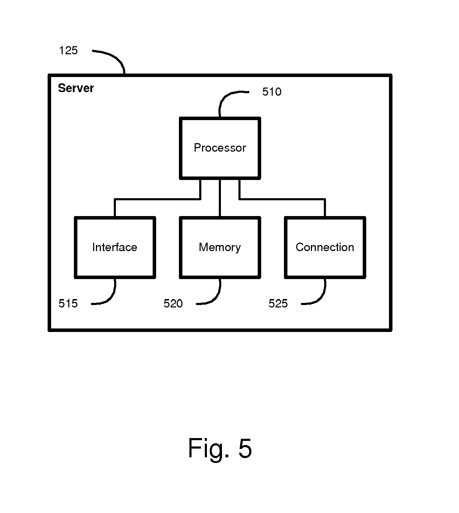

FIG. 5 illustrates the components of the server 125, which contains a processor 510, an interface 515, a memory 520, and a connection 525. As described in FIG. 3, the server 125 may be used as an intermediary when the originating navigation device 105 transmits the alert location to the recipient navigation device 105.

The processor 510 is operable to execute logic as computer-implemented instructions and may execute the filtering rules as described in FIG. 3. The processor may interact with the memory 520 in order to store or retrieve the alert location or the filtering rules. The processor 510 is further operable to simultaneously multicast the same alert location to multiple recipient navigation devices using the connection 525.

The interface 515 allows for the user to interact with the server 125. The interface 515 may visually present alert location-related information to the user through a display, a speaker, a headset, or other component capable of output to the user. The interface 515 may accept input from the user through a keypad, a keyboard, a touchscreen, a mouse, or other component capable of accepting user input. The interface 515 could be used to input user-defined filtering rules in order to centrally manage the alert locations.

The server 125 may store the alert location in the memory 520, which could be embodied as a flash memory, a random access memory, a hard disk drive, or other component capable of storage. The memory 520 could also be used to store filtering rules as described above in FIG. 3. Stored alert locations may be multicast at a later time as well.

The server 125 may communicate with the navigation device 105 through the connection 525. The connection 525 allows for the server 125 to communicate over a data network. As shown in FIG. 1, the server 125 may be connected to the Internet 130 or the MSC 120. The connection 525 could enable communication via the Internet 130 or through the MSC 120 and could be embodied as an Ethernet card, an 802.11 network card, a Bluetooth card, an infrared card, a modem, or any other component capable of sending or receiving the alert location.

FIG. 6 illustrates an event situation 600 which is located within a system of highways, comprised of an interstate 605, another interstate 610, and yet another interstate 615. At a position 625, a user of the recipient navigation device 105 is traveling south on the interstate 605. Suddenly, the recipient navigation device 105 receives a number of alert locations associated with a traffic accident. The alert locations form a plurality of accident locations 620. The recipient navigation device 105 already has a planned route 630 selected for navigation, the recipient navigation device 105 may warn the user that the plurality of accident locations 620 directly blocks the planned route 630. The recipient navigation device 105 may then suggest an alternative route 635 which avoids the plurality of accident locations 620 by navigating on the interstate 610 and the interstate 615. The user may choose to ignore the suggestion of the alternative route 635 and proceed south along the interstate 605 toward the plurality of accident locations 620. FIG. 7 further defines the behavior the recipient navigation device 105 when the recipient navigation device 105 receives the plurality of accident locations 620.

FIG. 7 depicts a process 700 by which the recipient navigation device 105 may plan an alternative route around the alert location sent by the originating navigation device 105. The process 700 shall be described in respect to the situation illustrated in FIG. 6, but it should be understood by the reader that the process 700 is applicable to any alert situation (e.g. road construction, social gathering, terrorist attack, fire, etc.). The process 700 begins at start block 705 where the recipient navigation device 105 already has the planned route 630 selected. The process 700 proceeds to block 710 where the recipient navigation device 105 receives the plurality of accident locations 620 from the originating navigation devices 105. The recipient navigation device 105 could perform additional processing on the plurality of accident locations as described in FIG. 3.

The process 700 proceeds to block 715, and the recipient navigation device 105 may calculate the delay caused by the plurality of accident locations 620. The recipient navigation device 105 may update the interface 415 in order to notify the user of the upcoming delay. For instance, should the recipient navigation device 105 proceed on the planned route 630, the recipient navigation device 105 may indicate the additional time required to navigate through the plurality of accident locations 620. The navigation device 105 may also determine the alternative route 635.

Proceeding to decision block 720, the recipient navigation device 105 may present the user with the option of selecting the alternative route 625. In one embodiment, the recipient navigation device 105 may automatically select the alternative route 625 without any user interaction. In another embodiment, the recipient navigation device 105 could select the alternative route 625 based upon user-defined preferences. In one exemplary embodiment, the recipient navigation device 105 could automatically select the alternative route 625 when the planned route 630 will take twenty percent longer to traverse than the alternative route 625. If the recipient navigation device 105 chooses to navigate on the alternative route 625, then the process 700 proceeds along the NO branch to block 725. In block 725, the recipient navigation device 105 selects the alternative route 625 and may update the interface 415 in order to notify the user. The process 700 then continues to the end block 730 and terminates.

Going back to block 720, if the recipient navigation device chooses to continue on the planned route 630, the process 700 proceeds along the YES branch to block 730. The recipient navigation device 105 may update the estimated travel time required to arrive at the planned route's 630 destination by factoring in an estimated delay caused by the traffic accident. In one embodiment, the recipient navigation device 105 could calculate the estimated delay by calculating the originating navigation devices' 105 velocity and direction. In one embodiment, the velocity and direction could be calculated based on the originating navigation device's 105 change in position relative to time. Then, the recipient navigation device 105 could use an actual delay caused to the originating navigation devices 105 as a heuristic to determine the estimated delay which the recipient navigation device 105 may experience itself when traveling through the plurality of accident locations 620. Other methods to calculate the estimated delay and to determine alternative routes may be obvious to one of skill in the art and should be understood to be similar in spirit and scope. The process 700 then proceeds to end block 730 and terminates.

The event situation 600 illustrated in FIG. 6 and process 700 described in FIG. 7 could readily be altered to describe a situation in which road construction 640 is underway near the plurality of accident locations 620. Alternative route planning might take a different approach when the recipient navigation device 105 is attempting to avoid the road construction 640 since there is not necessarily a widespread delay. Therefore, additional data may be attached to the alert location by the originating navigation devices 105 as described in FIG. 3. For instance, additional data may be the number of open lanes, available detours, a photograph of the construction area, etc. Such additional data could be used by the recipient navigation device 105 to determine the extent of the delay in order to select an alternative route 635. Should the recipient navigation device 105 continue along the planned route 630 through the road construction 640, the recipient navigation device 105 could account for the fact that the recipient navigation device 105 will be traveling at a slower velocity through the road construction 640 in order to calculate the estimated delay. In one embodiment, the recipient navigation device 105 may accept user-defined preferences to determine behavior in the road construction situation described above, e.g., the recipient navigation device 105 could be configured to never account for the estimated delay caused by road construction. For instance, the user might be a police officer or ambulance driver, who is not subject to reduced speed limits in road construction areas.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

Although selected embodiments have been illustrated and described in detail, it will be understood that various substitutions and alterations can be made therein without departing from the spirit and scope of the present invention, as defined by the following claims.

## Claims

1. A method of processing an alert location at a navigation device comprising:
detecting input of an alert condition;
determining a current location of the navigation device;
generating the alert location from the alert condition and the current location; and
transmitting the alert location.

2. The method of Claim 1, further comprising:
associating additional data with the alert location.

3. The method of Claim 1, further comprising:
wirelessly transmitting the alert location to a server.

4. One or more navigation devices, wherein a first of the one or more navigation devices comprises:
an interface which receives input of an alert condition;
a processor which determines a current location of the first of the one or more navigation devices, wherein the processor generates an alert location from the alert condition and the current location; and
a connection which transmits the alert location.

5. The one or more navigation devices of Claim 4, wherein the processor of the first of the one or more navigation devices associates additional data with the alert location.

6. The one or more navigation devices of Claim 4, wherein the processor of the first of the one or more navigation devices wirelessly transmits the alert location to a server.

7. The one or more navigation devices of Claim 4, wherein a second of the one or more navigation devices comprises:
a connection which receives the alert location;
an interface which displays a map; and
a processor which adds the alert location to the map.

8. The one or more navigation devices of Claim 7, wherein the second of the one or more navigation devices further comprises:
presenting a suggested alert condition based on the received alert location.

9. The one or more navigation devices of Claim 7, wherein the processor of the second of the one or more navigation devices is operable to selectively process the alert condition.

10. The one or more navigation devices of Claim 9, wherein the processor of the second of the one or more navigation devices is operable to process a filtering rule against the alert location, the filtering rule selectively preventing further processing of the alert location.

11. The one or more navigation devices of Claim 7, wherein the processor of the second of the one or more navigation devices is operable to generate a route from a current location of the second of the one or more navigation devices to the alert location, the current location of the second of the one or more navigation devices being determined using global positioning system.

12. The one or more navigation devices of Claim 7, wherein the processor of the second of the one or more navigation devices is operable to determine a planned route from a current location of the second of the one or more navigation devices to a user-defined location.

13. The one or more navigation devices of Claim 12, wherein the processor of the second of the one or more navigation devices is operable to determine an estimated travel time to the user-defined location via the planned route.

14. The one or more navigation devices of Claim 13, wherein the processor of the second of the one or more navigation devices is operable to adjust the estimated travel time by an estimated delay caused by the alert condition occurring at the alert location.

15. The one or more navigation devices of Claim 14, wherein the processor of the second of the one or more navigation devices is operable to determine the estimated delay by monitoring a change in position of the first of the one or more navigation devices.

16. The one or more navigation devices of Claim 14, wherein the processor of the second of the one or more navigation devices is operable to determine an alternative route to the user-defined location based upon the alert location, the alternative route avoiding the alert location.

17. An navigation device comprising:
means for detecting input of an alert condition;
means for determining a current location of the navigation device;
means for generating an alert location from the alert condition and the current location; and
means for transmitting the alert location.

18. The navigation device of Claim 17, further comprising:
means for associating additional data with the alert location.

19. The navigation device of Claim 17, further comprising:
means for wirelessly transmitting the alert location to a server.

20. A computer program product comprising:
computer-readable medium comprising:
at least one instruction for detecting input of an alert condition;
at least one instruction for determining a current location of a navigation device;
at least one instruction for generating an alert location from the alert condition and the current location; and
at least one instruction for transmitting the alert location.

21. The computer program product of Claim 20, further comprising:
at least one instruction for associating additional data with the alert location.

22. The computer program product of Claim 20, further comprising:
at least one instruction for wirelessly transmitting the alert location to a server.

23. A method of processing an alert location at a navigation device comprising:
receiving the alert location, the alert location being generated from an alert condition and a location;
displaying a map; and
adding the alert location to the map.

24. The method of Claim 23, wherein additional data is received with the alert location.

25. The method of Claim 23, further comprising:
presenting a suggested alert condition based on the received alert location.

26. The method of Claim 23, further comprising:
selectively processing the alert location.

27. The method of Claim 26, further comprising:
processing a filtering rule against the alert location, the filtering rule selectively preventing further processing of the alert location.

28. The method of Claim 23, further comprising:
generating a route from a current location of the navigation device to the alert location, the current location of the navigation device being determined using global positioning system.

29. The method of Claim 23, further comprising:
determining a planned route from a current location of the navigation device to a user-defined location.

30. The method of Claim 29, further comprising:
determining an estimated travel time to the user-defined location via the planned route.

31. The method of Claim 30, further comprising:
adjusting the estimated travel time by an estimated delay caused by the current event occurring at the alert location.

32. The method of Claim 31, further comprising:
determining the estimated delay by monitoring a change in position of a second navigation device, wherein the second navigation device is the source of the alert location.

33. The method of Claim 31, further comprising:
determining an alternative route to the user-defined location based upon the alert location, the alternative route avoiding the alert location.

34. A navigation device comprising:
means for receiving an alert location, the alert location being generated from an alert condition and a location;
means for displaying a map; and
means for adding the alert location to the map.

35. The navigation device of Claim 34, wherein additional data is received with the alert location.

36. The navigation device of Claim 34, further comprising:
means for presenting a suggested alert condition based on the received alert location.

37. The navigation device of Claim 34, further comprising:
means for selectively processing the alert location.

38. The navigation device of Claim 37, further comprising:
means for processing a filtering rule against the alert location, the filtering rule selectively preventing further processing of the alert location.

39. The navigation device of Claim 34, further comprising:
means for generating a route from a current location of the navigation device to the alert location, the current location of the navigation device being determined using global positioning system.

40. The navigation device of Claim 34, further comprising:
means for determining a planned route from a current location of the navigation device to a user-defined location.

41. The navigation device of Claim 40, further comprising:
means for determining an estimated travel time to the user-defined location via the planned route.

42. The navigation device of Claim 41, further comprising:
means for adjusting the estimated travel time by an estimated delay caused by the alert condition occurring at the alert location.

43. The navigation device of Claim 42, further comprising:
means for determining the estimated delay by monitoring a change in position of a second navigation device, wherein the second navigation device generated the alert location.

44. The navigation device of Claim 42, further comprising:
means for determining an alternative route to the user-defined location based upon the alert location, the alternative route avoiding the alert location.

45. A computer program product comprising:
computer-readable medium comprising:
at least one instruction for receiving an alert location, the alert location being generated from an alert condition and a location;
at least one instruction for displaying a map; and
at least one instruction for adding the alert location to the map.

46. The computer program product of Claim 45, wherein additional data is received with the alert location.

47. The computer program produce of Claim 45, further comprising:
at least one instruction for presenting a suggested alert condition based on the received alert location.

48. The computer program product of Claim 45, further comprising:
at least one instruction for selectively processing the alert location.

49. The computer program product of Claim 48, further comprising:
at least one instruction for processing a filtering rule against the alert location, the filtering rule selectively preventing further processing of the alert location.

50. The computer program product of Claim 45, further comprising:
at least one instruction for generating a route from a current location of a navigation device to the alert location, the current location of the navigation device being determined using global positioning system.

51. The computer program product of Claim 45, further comprising:
at least one instruction for determining a planned route from a current location of a navigation device to a user-defined location.

52. The computer program product of Claim 51, further comprising:
at least one instruction for determining an estimated travel time to the user-defined location via the planned route.

53. The computer program product of Claim 52, further comprising:
at least one instruction for adjusting the estimated travel time by an estimated delay caused by the alert condition occurring at the alert location.

54. The computer program product of Claim 53, further comprising:
at least one instruction for determining the estimated delay by monitoring a change in position of a second navigation device, wherein the second navigation device generated the alert location.

55. The computer program product of Claim 53, further comprising:
at least one instruction for determining an alternative route to the user-defined location based upon the alert location, the alternative route avoiding the alert location.

56. A server comprising:
a connection; and
a processor operable to receive an alert location using the connection from a first navigation device and operable to transmit the alert location to at least one second navigation device, wherein the alert location is generated from an alert condition and a location generated by the first navigation device.

57. The server of Claim 56, wherein the processor is operable to multicast the alert location to a plurality of second navigation devices using the connection.

58. The server of Claim 56, wherein the processor is operable to process a filtering rule against the alert location, wherein the filtering rule selectively prevents the connection from transmitting the alert location to the at least one second navigation device.

59. The server of Claim 56, further comprising an interface, wherein the filtering rule can be inputted into the server using an interface.

60. The server of Claim 56, wherein the processor is operable to generate a suggested alert condition based on the received alert location.

61. The server of Claim 60, wherein the connection is operable to transmit the suggested alert condition to the at least one second navigation device.
